# EUROPÄISCHE PATENTSCHRIFT

(11) **EP 1 338 405 B1**
(45) Veröffentlichungstag und Bekanntmachung des Hinweises auf die Patenterteilung: **26.07.2006**
(21) Anmeldenummer: 01129976.5
(22) Anmeldetag: 17.12.2001
(51) Int. Cl.: B29C 67/24, C08J 5/06, B29K 201/00

(54) **Verfahren zur Herstellung von Formkörpern aus natürlichen Polymeren**
Process for manufacturing articles from natural polymers
Procédé de fabrication de pièces à base de polymères naturels

(43) Veröffentlichungstag der Anmeldung: 27.08.2003
(73) Patentinhaber: HB-Feinmechanik GmbH & Co.KG, 94526 Metten (DE)
(72) Erfinder: HB-Feinmechanik GmbH & Co.KG, 94526 Metten (DE)
(74) Vertreter: Wunderlich, Rainer

(56) Entgegenhaltungen:
- EP-A- 0 118 240
- EP-A- 0 327 505
- EP-A- 1 035 163
- WO-A-93/20140
- WO-A-94/14886
- DE-A- 19 830 774
- DE-C- 899 413
- DE-U- 29 515 476
- NL-C- 1 004 138
- US-A- 5 728 824
- US-A- 5 939 192

## Beschreibung

Die Erfindung betrifft ein Verfahren zur Herstellung von Formkörpern aus zumindest einem thermoplastischen natürlichen Polymer und einem kleinteiligen natürlichen Füllstoff, wobei das thermoplastische natürliche Polymer in einem Extruder aufgeschmolzen, mit dem kleinteiligen Füllstoff zu einer pastösen Materialmischung vermengt und zu den Formkörpern ausgeformt wird, und der kleinteilige natürliche Füllstoff vor dem Herstellen der pastösen Materialmischung mit einem Additiv getränkt und/oder benetzt wird.

Formkörper aus Materialmischungen, welche weitgehend aus natürlich nachwachsenden Rohstoffen bestehen, werden immer stärker nachgefragt. Insbesondere werden Formkörper aus einem thermoplastischen Polymer hergestellt, bei welchem das Polymer kein Mineralölprodukt sondern ein natürliches Polymer ist. Derartige natürliche Polymere, welche aus pflanzlichen und/oder tierischen Produkten hergestellt werden, sind seit langem bekannt.

So betrifft beispielsweise die US 5,939,192 einen Formkörper auf der Basis von pflanzlichem Fasermaterial, das in eine Matrix mindestens eines bei erhöhter Temperatur und erhöhtem Druck in einen gel-schmelze-artigen Zustand überführten, thermoplastisch verarbeiteten, biogenen Materials integriert ist. Dabei ist vorgesehen, granulare Vor-Formkörper durch Extrusion herzustellen. Weiterhin ist vorgesehen, Ausgangs- und/oder Zwischenprodukten vor oder nach dem Extrusionsverfahren Additive zuzusetzen.

Ferner sind aus der DE 198 30 774 Al thermoplastisch verarbeitbare Formmassen auf Basis von Stärkeestern und Naturfaserkomponenten bekannt. Hierbei ist vorgesehen, den Ausgangsprodukten vor einer Extrusion weiter Zusätze beizumischen.

Aus der US 5 728 824 A sind mikrofaser-verstärkte, biologisch abbaubare Stärkeesterverbindungen bekannt, deren Herstellung ein Extrusionsverfahren beinhalten kann. Hierbei ist wiederum vorgesehen, die Ausgangsmaterialien vor der Extrusion mit weiteren Zusatzstoffen zu vermischen.

Die DE 899 413 C beschreibt ein Verfahren zur Verbesserung der Haftfertigkeit von Kautschuk an Baumwolle durch Zugabe von Resorcinharz.

Die DE 295 15 476 Ul beschreibt ein Verbundbauteil, welches auf der Basis eines Bindewerkstoffs und eines Verstärkungsmaterial aus Naturfasern hergestellt wird. Dabei ist vorgesehen, gegebenenfalls Haftvermittler zuzusetzen.

Aus der NL 1 004 139 C sind faserverstärkte, geschäumte, papierartige Produkte bekannt, die aus natürlichen Polymeren und Fasern hergestellt werden. Dabei können während der Herstellung auch Additive zugegeben werden.

Der Erfindung liegt die **Aufgabe** zugrunde, ein Verfahren zur Herstellung von Formkörpern aus einem thermoplastischen natürlichem Polymer und einem kleinteiligen natürlichen Füllstoff anzugeben, mit welchem Formkörper besonders wirtschaftlich und sicher hergestellt werden können.

Nach der Erfindung wird die Aufgabe durch ein Verfahren mit den Merkmalen des Anspruchs 1 gelöst. Bevorzugte Ausführungsformen der Erfindung sind in den abhängigen Ansprüchen angegeben.

Ein Grundgedanke der Erfindung liegt darin, ein für einen besonderen Nutzzweck vorgesehenes flüssiges bzw. aufgeschmolzenes Additiv nicht einfach als zusätzliche Komponente in die Matrix der Materialmischung einzuarbeiten, sondern den natürlichen Füllstoff gezielt mit dem Additiv als Flüssigkeit zu tränken oder zu benetzen. Auf diese Weise können bestimmte Eigenschaften des kleinteiligen natürlichen Füllstoffes eingestellt werden, welcher üblicherweise Holzspäne oder ein anderer natürlicher Faserstoff ist.

Erfindungsgemäß ist es vorgesehen, dass das Verfahren in einem Extruder durchgeführt wird. In dem Extruder kann sowohl der Mischvorgang als auch ein Einspritzen in eine Form, ein Ausextrudieren durch ein Formwerkzeug oder ein Einfüllen in eine mechanische Stempel- oder Plattenpresse erfolgen.

Für ein besonders wirtschatliches Herstellen von Formkörpern mit einem Extruder ist die Verwendung eines Doppelwellenextruders mit gegenläufig angetriebenen Extruderschnecken vorteilhaft. Es sind jedoch auch Ein- und Mehrwellenextruder einsetzbar, wobei in gewissen Fällen auch ein Doppelwellenextruder mit gleichlaufendem Wellenantrieb möglich ist.

Eine erfindungsgemäße Durchführung des Verfahrens wird dadurch erreicht, dass der kleinteilige Füllstoff in den Extruder eingeführt wird und dass das Additiv in den Extruder eingedüst wird. Dabei erfolgt das Eindüsen des flüssigen Additivs in einem Bereich des Extruders, in welchem dem kleinteiligen Füllstoff noch nicht das natürliche Polymer zugeführt ist. Da der kleinteilige Füllstoff durch die drehenden Extruderschnecken beständig umgewälzt wird, kann auf diese Weise mit einer einfachen Eindüsvorrichtung eine zuverlässige Benetzung des kleinteiligen Füllstoffes sichergestellt werden.

Alternativ ist es nach der Erfindung möglich, dass das Additiv in einem pulverförmigen Zustand in den Extruder eingeleitet und darin aufgeschmolzen wird, wobei das Additiv eine Schmelztemperatur aufweist, welche geringer als die Schmelztemperatur des natürlichen Polymers ist. Auf diese Weise kann in einem ersten Bereich des Extruders das pulverförmige Additiv bei einer ersten Temperatur aufgeschmolzen werden. Aufgrund der Rotation der Extruderwellen erfolgt die gewünschte Benetzung des aufgeschmolzenen, flüssigen Additivs auf die Oberfläche der Füllstoffpartikel. In einem darauffolgenden Abschnitt wird die Temperatur der Materialmischung auf eine zweite Temperatur erhöht, bei welcher dann ein bereits mit dem Füllstoff vermengtes Polymer oder ein nunmehr separat zugeführtes Polymer aufgeschmolzen wird. Das aufgeschmolzene Polymer kann dann die beschichteten oder benetzten Füllstoffpartikel umschließen, um so die gewünschte pastöse Extrusionsmasse zu bilden.

Es ist erfindungsgemäß, dass das Additiv ein natürliches Öl oder Wachs ist. Diese können die Faser umhüllen und/oder in dieser aufgesaugt werden. Hierdurch wird die Faser in besonderer Weise geschützt. Beim Ablängen der Extrusionsstränge oder bei einem materialabhebenden Bearbeiten des hergestellten Formkörpers kann auf diese Weise verhindert werden, dass an den Schnitt- oder Bearbeitungsbereichen größere Flächen der Faser freiliegen, durch welche Feuchtigkeit aufgenommen werden könnte. Durch die spezielle Imprägnierung durch Wachse oder Öle wird einer derartigen Feuchtigkeitsaufnahme durch die Fasern entgegengewirkt, so dass eine für die Weiterverarbeitung nachteilige Feuchte oder ein vorzeitig einsetzender Schimmel- oder Verrottungsprozess verhindert wird. Durch die spezielle Imprägnierung der Füll- oder Faserstoffe vor der Einführung in den Extruder können diese auch problemlos über längere Zeit gelagert oder transportiert werden, ohne dass die Füllstoffpartikel in nennenswertem Maße Feuchtigkeit aufsaugen.

Eine weitere bevorzugte Ausführungsform der Erfindung besteht darin, das ein Additiv mit einer pilz-, bakterien- und/oder schädlingshemmenden Eigenschaft verwendet wird. Hierfür eignen sich insbesondere natürliche ätherische Öle mit einer gewünschten resistenten oder schädlingsabweisenden Wirkung. Dies schützt den Formkörper und stellt somit eine lange Lebensdauer des Produktes sicher.

Nach der Erfindung ist es weiter vorteilhaft, dass ein Additiv mit einer brandhemmenden Eigenschaft verwendet wird. Es kann sich hierbei um ein mineralisches Material handeln. In flüssiger Form kann das Material beispielsweise eine Kieselsäure oder ein Kieselsol sein, welches die Füllstoffpartikel benetzt oder in diese eindringt. Selbstverständlich können auch andere geeignete Flüssigkeiten eingesetzt werden, durch welche der Flammpunkt der in der Regel leicht brennbaren Faserstoffe deutlich heraufgesetzt wird. Mit dieser Behandlung der Faserstoffe wird auch der Flammpunkt des daraus hergestellten Formkörpers maßgeblich erhöht, so dass der Formkörper nicht mehr brennbar oder zumindest schwer entflammbar ist. Auf diese Weise ist es möglich, mit einem natürlichen Material, welches bis zu 100 % aus natürlichen, also nicht synthetisch gewonnenen Rohstoffen besteht, selbst Dämmplatten und andere Baumaterialien herzustellen, welche hohe Brandschutzerfordernisse erfüllen. Mit dem erfindungsgemäßen Verfahren ist es möglich, Formkörper herzustellen, welche die Anforderungen der deutschen Brandschutzklasse A2 erfüllen.

Mit der so hergestellten Formmasse können beliebige Formkörper hergestellt werden. Die Formgebung kann durch Einspritzen in eine Form, Einfüllen in eine mechanische Stempel- oder Plattenpresse oder Extrudieren durch ein Formwerkzeug zur Herstellung von Profilen, Rohren, etc. erfolgen. Auf diese Weise können besonders wirtschaftlich Leisten, Stangen, Rohre, Träger, Bretter etc. in großen Mengen hergestellt werden.

Nach der Erfindung ist es bevorzugt, dass die Formkörper Granulatkörner sind, welche bei Austritt aus dem Extruder durch Ablängen erzeugt werden. Hierzu kann als Schneideinrichtung ein rotierendes Messer verwendet werden, welches unmittelbar an einer Lochplatte als Formwerkzeug angeordnet ist.

Eine weitere bevorzugte Ausführungsform der Erfindung besteht darin, dass das Additiv mit dem Füllstoff zu einem Faserbrei vermengt wird, welcher aufgeschäumt wird. Das Additiv kann dabei zur verbesserten Bindung und Aufschäumung des Faserbreis ausgewählt sein. Hierdurch können sowohl feste als auch besonders leichte Formkörper nach der Erfindung hergestellt werden.

Zur Fertigung besonders fester Formkörper ist es vorteilhaft, dass als Additiv ein thermisch aushärtbarer Binder verwendet wird. Als Binder kann beispielsweise Wasserglas oder eine andere Verbindung auf Wasserglasbasis oder ein anderer geeigneter thermisch aushärtbarer Binder verwendet werden. Das Erhitzen erfolgt vorzugsweise nach Austritt der geformten Masse aus dem Extruder oder der Form, wobei das Erhitzen durch eine geeignete Heizeinrichtung erfolgt, insbesondere durch eine Infrarot- oder Mikrowellenbestrahlung. Der aushärtbare Binder ist dabei so eingestellt, dass die Aushärttemperatur innerhalb des Extruders nicht erreicht wird, sondern erst nach Austritt aus dem Extruder durch die spezielle Heizeinrichtung. Auf diese Weise können Formkörper gefertigt werden, welche gegenüber herkömmlich hergestellten Formkörpern eine bis zu zehnfach höhere Festigkeit aufweisen.

Für das erfindungsgemäße Verfahren können als thermoplastische natürliche Polymere alle geeigneten und bekannten Polymere pflanzlicher oder tierischer Herkunft verwendet werden, welche gute Bindungseigenschaften aufweisen. Insbesondere Stärke, Getreidemehle, Gelatine, Lignine, Naturwachse etc. sowie deren Komponenten sind geeignet. Je nach gewünschter Eigenschaft des Formkörpers kann der Anteil der natürlichen Polymere an der Materialmischung zwischen 10 bis 80 % liegen. Als weitere Komponenten für die Materialmischung können Füllstoffe, Plastifizierungsmittel, Farbpigmente sowie weitere Additive zur Herstellung gewünschter Materialeigenschaften vorgesehen werden.

Der kleinteilige natürliche Füllstoff kann sowohl pflanzlicher oder tierischer Herkunft sein. Besonders bevorzugt sind Holz in Form von Sägemehl und/oder Faserholz wie Palmenstämme, geschreddert und getrocknet, Spanplatten geschreddert bzw. recycelt, Stroh von diversen Getreidearten, Schilf, Bagasse aus der Zuckerrohrgewinnung, Körnerspelze wie Reisspelze, Dinkelspelze bzw. Schalen, Naturfasern aller Art wie Kokos, Hanf, Flachs usw., Ölsaattrester, Olivenöltrester sowie Fruchttrester in getrocknetem oder ungetrocknetem Zustand. Als Naturstoffe tierischer Herkunft können Haare oder Hornspäne verwendet werden. Die Rohstoffe sind vorzugsweise in getrockneter Form zu verarbeiten, können aber auch durch besondere Maßnahmen, beispielsweise durch mehrmalige Entgasungen, bis ca. 25 % Restfeuchte verarbeitet werden. Die Naturfasern können in verschiedenen und/oder definierten Längen als zusätzliche Armierung bzw. zur Erhöhung der Biege- und Zugfestigkeit zugesetzt werden.

## Patentansprüche

1. Verfahren zur Herstellung von Formkörpern aus zumindest einem thermoplastischen natürlichen Polymer und einem kleinteiligen natürlichen Füllstoff, wobei
- das thermoplastische natürliche Polymer in einem Extruder aufgeschmolzen, mit dem kleinteiligen Füllstoff zu einer pastösen Materialmischung vermengt und zu den Formkörpern ausgeformt wird, und
- der kleinteilige natürliche Füllstoff vor dem Herstellen der pastösen Materialmischung mit einem Additiv getränkt oder benetzt wird, wobei
- der kleinteilige natürliche Füllstoff in einem unbenetzten Zustand in den Extruder eingeleitet wird,
- das Additiv in den Extruder eingeleitet wird,
- der kleinteilige natürliche Füllstoff in dem Extruder mit dem Additiv vermengt wird, wobei der kleinteilige natürliche Füllstoff mit dem Additiv getränkt oder benetzt wird,
- in einem darauffolgenden Abschnitt des Extruders das thermoplastische natürliche Polymer eingeführt wird, und
- das thermoplastische natürliche Polymer in diesem Abschnitt aufgeschmolzen und mit dem mit Additiv getränkten oder benetzten Füllstoff vermengt wird,
**dadurch gekennzeichnet, daß** das Einleiten des Additivs in den Extruder getrennt vom Einleiten des kleinteiligen natürlichen Füllstoffs in den Extruder und vor der zuführung des thermoplastischen natürlichen polymers in den Extruder erfolgt.

2. Verfahren nach Anspruch 1,
**dadurch gekennzeichnet,**
**dass** das Additiv in einem pulverförmigen Zustand in den Extruder eingeleitet und darin aufgeschmolzen wird, wobei das Additiv eine Schmelztemperatur aufweist, welche geringer als die Schmelztemperatur des natürlichen Polymers ist.

3. Verfahren nach einem der Ansprüche 1 oder 2,
**dadurch gekennzeichnet,**
**dass** das Additiv ein natürliches Öl oder Wachs ist.

4. Verfahren nach einem der Ansprüche 1 bis 3,
**dadurch gekennzeichnet,**
**dass** ein Additiv mit einer pilz-, bakterien- und/oder schädlingshemmenden Eigenschaft verwendet wird.

5. Verfahren nach einem der Ansprüche 1 bis 4,
**dadurch gekennzeichnet,**
**dass** ein Additiv mit einer brandhemmenden Eigenschaft verwendet wird.

6. Verfahren nach einem der Ansprüche 1 bis 5,
**dadurch gekennzeichnet,**
**dass** als Additiv ein thermisch aushärtbarer Binder verwendet wird.

7. Verfahren nach einem der Ansprüche 1 bis 6,
**dadurch gekennzeichnet,**
**dass** die Formkörper Granulatkörner sind, welche bei Austritt aus dem Extruder durch Ablängen erzeugt werden.

8. Verfahren nach einem der Ansprüche 1 bis 7,
**dadurch gekennzeichnet,**
**dass** durch Extrudieren Profile als Formkörper geformt werden.

9. Verfahren nach einem der Ansprüche 1 bis 8,
**dadurch gekennzeichnet,**
**dass** das Additiv mit dem Füllstoff zu einem Faserbrei vermengt wird, welcher aufgeschäumt wird.

## Claims

1. Method of producing molded articles of at least one thermoplastic natural polymer and one small particle comprised natural filler, wherein
- the thermoplastic natural polymer is melted in an extruder, mixed with the small particle comprised filler to a pasty material mixture and shaped into the molded articles, and
- the small particle comprised natural filler is impregnated and/or wetted with an additive prior to the production of the pasty material mixture, wherein
- the small particle comprised natural filler is fed into the extruder in an unwetted state,
- the additive is fed into the extruder,
- the small particle comprised natural filler is mixed with the additive in the extruder, wherein the small particle comprised natural filler is impregnated or wetted with the additive,
- in a subsequent section of the extruder the thermoplastic natural polymer is introduced, and
- in this section the thermoplastic natural polymer is melted and mixed with the filler that is impregnated or wetted with additive,
**characterized in that**
the feeding of the additive into the extruder takes place separately from the introduction of the small particle comprised natural filler into the extruder and prior to the introduction of the thermoplastic natural polymer into the extruder.

2. Method according to claim 1,
**characterized in that**
the additive is fed into the extruder in a pulverous state and melted therein, the additive having a melting temperature which is lower than the melting temperature of the natural polymer.

3. Method according to claim 1 or 2
**characterized in that**
the additive is a natural oil or wax.

4. Method according to any one of claims 1 to 3,
**characterized in that**
an additive is used containing a fungus-, bacteria- and/or parasite-stemming property.

5. Method according to any one of claims 1 to 4,
**characterized in that**
an additive is used containing a flame-retardant property.

6. Method according to any one of claims 1 to 5,
**characterized in that**
a thermosetting binder is used as additive.

7. Method according to any one of claims 1 to 6,
**characterized in that**
the molded articles are granules which are produced by means of length cutting when discharged from the extruder.

8. Method according to any one of claims 1 to 7,
**characterized in that**
as a result of extrusion profiles are being shaped as molded articles.

9. Method according to any one of claims 1 to 8,
**characterized in that**
the additive is mixed with the filler to a fiber slurry which is foamed.

## Revendications

1. Procédé de fabrication de pièces moulées à partir d'au moins un polymère naturel thermoplastique et d'une charge de remplissage naturelle à particules fines, dans lequel
- le polymère naturel thermoplastique est fondu dans une extrudeuse, mélangé à la charge de remplissage à particules fines pour former un mélange de matières pâteux, et moulé pour former les pièces moulées, et
- la charge de remplissage naturelle à particules fines est imprégnée ou humidifiée avec un additif avant la fabrication du mélange de matières pâteux ; dans lequel
- la charge de remplissage naturelle à particules fines est introduite dans l'extrudeuse dans un état non mouillé,
- l'additif est introduit dans l'extrudeuse,
- la charge de remplissage à particules fines est mélangée à l'additif dans l'extrudeuse, la charge de remplissage naturelle à particules fines étant imprégnée ou mouillée avec l'additif,
- le polymère naturel thermoplastique est introduit dans une section suivante de l'extrudeuse, et
- le polymère naturel thermoplastique est fondu dans cette section et mélangé à la charge de remplissage imprégnée ou mouillée avec l'additif,
***caractérisé en* ce que** l'introduction de l'additif dans l'extrudeuse s'effectue séparément de l'introduction dans l'extrudeuse de la charge de remplissage naturelle à particules fines et avant l'apport du polymère naturel thermoplastique dans l'extrudeuse.

2. Procédé selon la revendication 1, ***caractérisé en* ce que** l'additif est introduit dans l'extrudeuse dans un état pulvérulent et y est fondu, l'additif présentant une température de fusion qui est inférieure à la température de fusion du polymère naturel.

3. Procédé selon l'une quelconque des revendications 1 ou 2, ***caractérisé* en ce que** l'additif est une huile ou une cire naturelle.

4. Procédé selon l'une quelconque des revendications 1 à 3, ***caractérisé en ce qu*'**on utilise un additif ayant des propriétés fongicides, bactéricides et/ou antiparasitaires.

5. Procédé selon l'une quelconque des revendications 1 à 4, ***caractérisé en ce qu*'**on utilise un additif ayant des propriétés ignifuges.

6. Procédé selon l'une quelconque des revendications 1 à 5, ***caractérisé en ce qu*'**on utilise comme additif un liant thermodurcissable.

7. Procédé selon l'une quelconque des revendications 1 à 6, ***caractérisé* en ce que** les pièces moulées sont des granulés qui sont produits par découpe en longueur à la sortie de l'extrudeuse.

8. Procédé selon l'une quelconque des revendications 1 à 7, ***caractérisé* en ce que**, par extrusion, on forme des profilés en tant que pièces moulées.

9. Procédé selon l'une quelconque des revendications 1 à 8, ***caractérisé* en ce que** l'additif est mélangé à la charge de remplissage pour former une pâte fibreuse, qui est ensuite moussée.
